# EUROPÄISCHE PATENTSCHRIFT

(11) **EP 1 128 926 B1**
(45) Veröffentlichungstag und Bekanntmachung des Hinweises auf die Patenterteilung: **29.01.2003**
(21) Anmeldenummer: 99936231.2
(22) Anmeldetag: 19.08.1999
(51) Int. Cl.: B23K 26/00

(54) **VERFAHREN UND VORRICHTUNG ZUM POSITIONIEREN VON KANTEN, INSBESONDERE BEIM ROHRSCHWEISSEN**
METHOD AND DEVICE FOR POSITIONING EDGES, ESPECIALLY IN TUBE WELDING
PROCEDE ET DISPOSITIF POUR LE POSITIONNEMENT D'ARETES, EN PARTICULIER LORS DU SOUDAGE D'UN TUBE

(30) Priorität: 13.11.1998 CH 228298
(43) Veröffentlichungstag der Anmeldung: 05.09.2001
(73) Patentinhaber: ELPATRONIC AG, 8962 Bergdietikon (CH)
(72) Erfinder: GYSI, Peter, CH-5454 Bellikon (CH)
(86) Internationale Anmeldenummer: CH9900383
(87) Internationale Veröffentlichungsnummer: WO00029164

(56) Entgegenhaltungen:
- EP-A- 0 212 620
- WO-A-91/01506
- FR-A- 2 660 225
- US-A- 2 792 799
- US-A- 4 341 943

## Beschreibung

Die Erfindung betrifft ein Verfahren gemäss Oberbegriff des Anspruchs 1 und eine Anwendung desselben gemäss Oberbegriff des Anspruchs 11. Ferner betrifft die Erfindung eine Positioniervorrichtung gemäss Oberbegriff des Anspruchs 12 sowie eine Schweissvorrichtung mit einer solchen gemäss Anspruch 19. Weiter betrifft die Erfindung eine Verwendung der Positioniervorrichtung gemäss Anspruch 20 und weiter ein Verfahren und eine Vorrichtung zum Schweissen von konischen Rohren gemäss Anspruch 21 bzw. 22.

Zum Schweissen dünnwandiger Rohre, worunter Rohre mit einem Verhältnis von Rohrdurchmesser zu Materialdicke des Rohres von etwa ≥ 65 verstanden werden sollen, ist es aus DE-C-44 32 674 bekannt, das Rohr mit einer Spannvorrichtung zu halten, wobei auch ein innerer Auflagearm verwendet wird. Das Positionieren des Rohres in dieser Spannvorrichtung ist relativ aufwendig. Es besteht indes ein zunehmender Bedarf nach verschweissten, dünnwandigen Rohren verschiedenster Querschnitte, welche nachfolgend z.B. durch Innenhochdruckumformung zu Bauteilen, z.B. für die Automobilindustrie, umgeformt werden können. Die Umformung bedingt eine qualitativ hochwertige Schweissnaht, was andererseits eine präzise Lage der aneinanderllegenden Kanten bei der Schweissung erfordert. Diese Anforderung besteht natürlich auch bei der Stumpfbeschweissung ebener Bleche.

An der Aussenseite der Bleche werden nach Stand der Technik Rollen verwendet, nahe des Schweissbereichs werden insbesondere der Aussenkontur des Rohres angepasste Formrollen zur Positionierung der Bleche bzw. des vorgeformten Rohlings bzw. der Blechkanten verwendet. Die Rollen bilden nur linienförmig angreifende Positionierungselemente und müssen im Schweissbereich gekühlt werden, was aufwendig ist.

FR-A-2 660 225, von welcher Schrift als nächstkommender Stand der Technik ausgegangen wird, zeigt einzelne Rollen, die örtlich verteilt Anschläge für die zu verschweissenden Kanten des Rohres bilden. Ferner sind auf bekannte Weise Formrollen vorgesehen. Auf diese Weise erscheint eine für das Laserschweissen hochwertiger Schweissnähte notwendige genaue Positionierung nicht erzielbar zu sein. Aus US-A-2 792 799 ist es bekannt, beim Schweissen von dickwandigen Rohren Formelemente einzusetzen.

Der Erfindung liegt daher die Aufgabe zugrunde, ein Verfahren bzw. eine Vorrichtung zu schaffen, welche eine präzise Positionierung der Kanten erlaubt.

Diese Aufgabe wird bei einem Verfahren der eingangs genannten Art mit den kennzeichnenden Merkmalen des Anspruchs 1 gelöst.

Dadurch, dass ein mit den zu verschweissenden Kanten mitlaufendes Anschlagelement vorgesehen ist, können die Kanten mit geeigneter Kraft an dieses positioniert werden, ohne dass Reibungskräfte zwischen Kanten und Anschlagelement die Positionierung stören können.

Durch die Beaufschlagung des Bleches mit einem sich mit diesem entlang eines Abschnittes des Förderweges bewegenden endlosen Formelement kann eine flächige Beaufschlagung der Bleche erzielt werden, die eine sehr gute Positioniergenauigkeit der Kanten zueinander erlaubt. Da das endlose Formelement sich an der Schweissstelle vorbeibewegt und nicht stationär verbleibt, ist eine spezielle Kühlung desselben in der Regel nicht notwendig.

Vorzugsweise wird das Anschlagelement zum Zusammenführen der Kanten verwendet, indem es mit keilförmigen, verschieden tief zwischen die Kanten ragenden Anschlagteilen versehen ist. Bevorzugterweise bildet das Formelement eine schalenförmige Aufnahme für das Blech, insbesondere im oberen Teil eines rohrförmigen Rohlings und beidseits der Schweisslinie.

Eine bevorzugte Anwendung des Verfahrens liegt beim Schweissen von vorgebogenen Rohlingen zu Rohren gemäss Anspruch 11. Bei dieser Anwendung ist die erzielbare genaue Kantenpositionierung bzw. Zusammenführung besonders vorteilhaft.

Der Erfindung liegt ferner die Aufgabe zugrunde, eine Vorrichtung zur Positionierung von Blechkanten zu schaffen.

Dies wird bei der eingangs genannten Vorrichtung mit den kennzeichnenden Merkmalen des Anspruchs 12 erreicht.

Durch das mit den Kanten mitbewegte Endloselement wird ein Anschlag geschaffen, der ein reibungsfreies Anlegen der geförderten Blechkanten erlaubt und damit eine präzise Positionierung.

Durch das endlose Formelement wird für den an die Kanten anschliessenden Blechbereich eine kontinuierliche Anlage gebildet, welche eine genaue Positionierung der Kantenlage auch sehr dünner Bleche erlaubt. Ferner muss das Formelement nicht gekühlt werden.

Vorzugsweise weist die Vorrichtung keilförmige Anschlagteile auf und weist weiter bevorzugt einen verstellbaren Träger für das Endloselement auf, mittels welchem dessen Eintauchort und dessen Eintauchtiefe einstellbar sind.

Der Erfindung liegt ferner die Aufgabe zugrunde, das Schweissen konischer Rohre, vorzugsweise nach den vorgenannten Verfahren, zu ermöglichen. Dies wird mit den kennzeichnenden Merkmalen des Anspruchs 21 erzielt.

Der Erfindung liegt ferner die Aufgabe zugrunde, eine Vorrichtung zum Schweissen konischer Rohre zu schaffen, vorzugsweise gemäss einer der vorgenannten Vorrichtungen.

Diese Aufgabe wird mit einer Vorrichtung gemäss Anspruch 22 gelöst.

Im folgenden werden zur Erläuterung der Verfahren und Vorrichtungen Ausführungsbeispiele derselben anhand der Figuren näher erläutert. Dabei zeigt
Figur 1 eine perspektivische Ansicht einer ersten Ausführungsform;
Figur 2 eine Seitenansicht einer Vorrichtung gemäss Figur 1;
Figur 3 eine schematische, vereinfachte Seitenansicht und Draufsicht einer Ausführungsform zur Erläuterung des Anschlagelementes;
Figur 4 eine Figur 3 entsprechende Darstellung mit einer geänderten Lage des Anschlagelementes;
Figur 5 eine Schnittansicht mit zwei Schnittebenen durch eine Ausführungsform gemäss Figur 1;
Figur 6 eine abgewandelte Ausführungsform in Schnittdarstellung gemäss Figur 5;
Figur 7 eine vereinfachte Schnittdarstellung einer weiteren Ausführungsform;
Figur 8 eine Darstellung gemäss Figur 7 mit einer anderen Formgebung der Formstücke;
Figur 9 eine Schnittdarstellung einer Ausführungsform der Vorrichtung;
Figur 10 eine weitere Schnittdarstellung einer Ausführungsform;
Figur 11 eine weitere Schnittdarstellung einer Ausführungsform;
Figur 12 eine schematische Ansicht der Schweissvorrichtung zum Schweissen konischer Rohre;
Figur 13 eine Frontansicht der Ausführungsform von Figur 12.

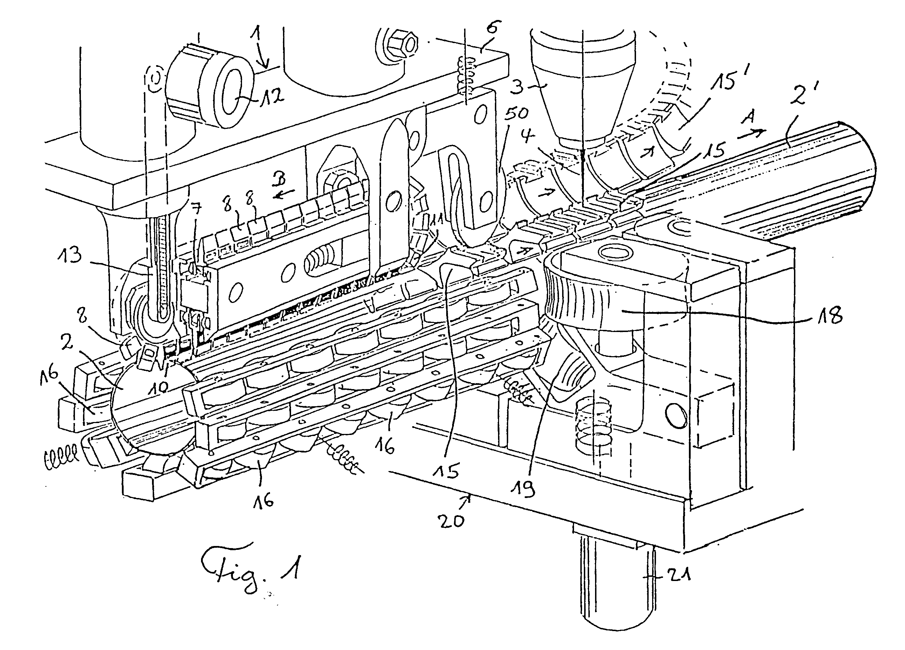

Figur 1 zeigt in perspektivischer Ansicht eine Positioniervorrichtung 1 an einer nicht näher dargestellten Schweissmaschine, mittels welcher aus einem vorgerundeten Rohling ein Rohr 2' geschweisst wird. Zu diesem Zweck ist ein Schweisskopf 3 vorgesehen, welcher die stumpf aneinanderliegenden Kanten des Rohlings mit dem Schweissstrahl 4 aus einer nicht dargestellten Laserstrahlquelle zusammenschweisst. Das Rohr 2', welches insbesondere ein dünnwandiges Rohr mit einem Verhältnis von Rohrdurchmesser zu Materialdicke von grösser gleich 65 ist, wird nachfolgend z.B. durch Innenhochdruckverformung umgeformt, um z.B. ein Karosseriebauteil für ein Fahrzeug zu bilden. Die vorliegende Erfindung befasst sich mit dem Positionieren der Kanten des zu verschweissenden Bleches. Für eine einwandfreie Schweissnaht muss eine korrekt positionierte Stumpflage der Blechkanten erzielt werden. Gemäss einem ersten Aspekt der Erfindung wird dazu ein endloses Anschlagelement verwendet, welches mit dem in Pfeilrichtung A bewegten Rohling 2 bzw. Rohr 2' mitbewegt wird und entlang eines mit dessen Kanten gemeinsamen Abschnittes einen Anschlag für diese Kanten bildet. Im gezeigten Beispiel wird das Anschlagelement von einer Kette 7 gebildet, welche mit einer Vielzahl von Anschlagteilen 8, 9, 10 und 11 versehen ist, von welchen nur einige mit Bezugsziffern bezeichnet sind. Die angetrieben umlaufende Kette ist an einem schematisch dargestellten Träger 6 befestigt und wird durch einen Antrieb 12 z.B. über den gezeigten Zahnriemen bzw. ein von diesem angetriebenes Kettenrad zum Umlauf in Richtung des Pfeiles B angetrieben. Die Anschlagstücke 8 tauchen dabei entlang eines Abschnittes zwischen die Kanten ein, wobei in Figur 1 das soeben eingetauchte Anschlagstück mit 10 bezeichnet ist und das am Ende des Abschnittes wieder aus dem Rohling ausgetretene Anschlagstück mit 11 bezeichnet ist. Bevorzugterweise bildet das Anschlagelement mit den Anschlagstücken einen Anschlag für die Kanten, der ein Aufeinanderzulaufen der Kanten ermöglicht. Zu diesem Zweck sind im gezeigten Beispiel die Anschlagstücke 8 keilförmig ausgeführt und es ergibt sich durch den Träger ein verschieden tiefes Eintauchen der Anschlagstücke entlang deren gemeinsamen Abschnittes mit den Kanten und dadurch eine Verjüngung des Anschlages in Förderrichtung, was nachfolgend noch genauer erläutert wird. Natürlich könnte das Anschlagelement auch so ausgeführt sein, dass sich durch nicht keilförmig ausgeführte Anschlagstücke eine gleichbleibende Anschlagbreite ergibt. Wie grundsätzlich bekannt, wird der Rohling durch eine Vielzahl von Rollen 16 sowie durch Rollen 18 und 19 beaufschlagt und geführt. Die Rollen 16 bewirken dabei durch Druck auf den Rohling eine Beaufschlagung des Anschlagelementes durch die Kanten des Rohlings 2. Insbesondere die Rolle 18 kann durch einen Antrieb 21 angetrieben sein, um den Rohling bzw. das Rohr durch die Vorrichtung 1 bzw. die Schweissmaschine zu fördern. Zu diesem Zweck können auch weitere angetriebene Rollen oder Fördermittel in der Form von Fingern vorgesehen sein.

Gemäss einem weiteren Aspekt der Erfindung wird nun die obere, der Schweisslinie bzw. den Kanten benachbarte Führung nicht durch Rollen gebildet, sondern durch ein ebenfalls mit dem Rohling bzw. Rohr mitlaufendes Formelement 15 bzw. 15', welches in der Figur 1 nur angedeutet ist und z.B. ebenfalls aus jeweils einer Kette besteht, an welcher Formstücke angeordnet sind, die die der gewünschten Aussenform des Rohlings bzw. des Rohres angepasst sind und eine Art bewegter Formschale bilden, die das Blech in dem den Kanten benachbarten Bereich positionieren und damit ebenfalls die Kanten positionieren. Die Formelemente 15 und 15' sind dabei ebenfalls als umlaufende Ketten so geführt, dass sie das Rohr nach der Schweissstelle verlassen und vor der Schweissstelle wieder Kontakt mit dem Rohling aufnehmen.

Beide Aspekte der Erfindung, das eintauchende, mitbewegte Anschlagelement sowie das mitbewegte äussere Formelement können jeweils einzeln für sich zur Kantenpositionierung eingesetzt werden und für sich alleine mit bekannten Elementen kombiniert werden, oder sie können, wie in Figur 1 gezeigt, in Kombination eingesetzt werden. Wird nur das eintauchende Anschlagelement verwendet, so sind anstelle der Formelemente 15 bzw. 15' herkömmliche Rollen vorgesehen, welche an der Aussenseite des Rohlings bzw. des Rohres in der Form von Rollenkränzen angeordnet sind. Wird nur das mitbewegte Formelement 15 bzw. 15' verwendet, so kann als Anschlagelement eine an sich bekannte, herkömmliche, feststehende Schiene verwendet werden, welche Nuten für die Blechenden mit den Kanten aufweist, in welchen Nuten diese geführt sind. Erfindungsgemäss werden aber zum Positionieren der Kanten beide Aspekte der Erfindung kombiniert.

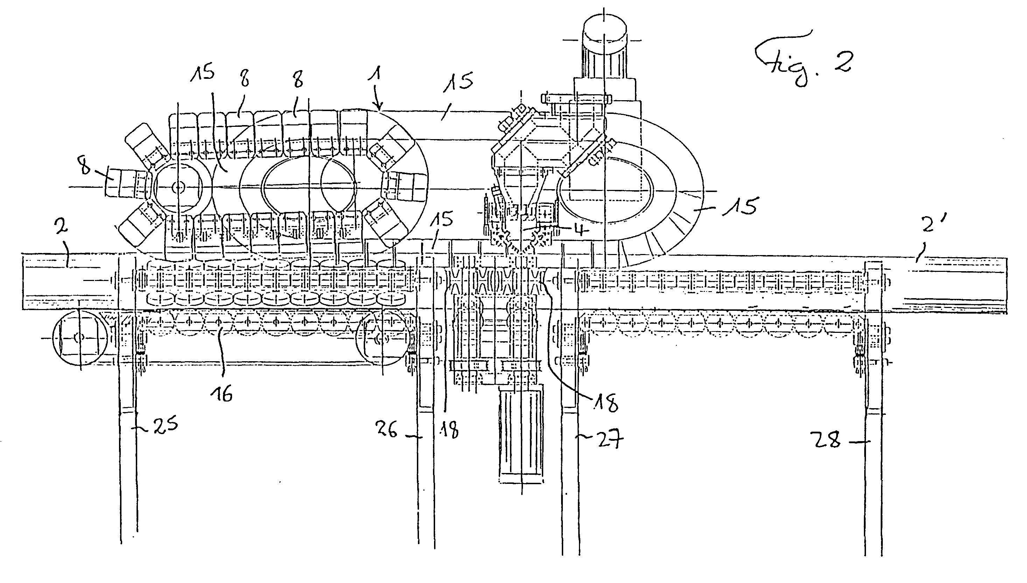

Figur 2 zeigt eine Seitenansicht einer Schweisseinrichtung mit den Positioniervorrichtungen gemäss der Erfindung. Dabei ist wiederum der Rohling 2 bzw. das geschweisste Rohr 2' ersichtlich und es sind die an sich bekannten Rollen 16 und 18 dargestellt, wobei eine oder mehrere Rollen 18 durch einen Antrieb 21 angetrieben sein können. Auch bei den Rollen 16 kann ein Antrieb vorgesehen sein. Nach der Schweissstelle, welche durch den Schweissstrahl 4 symbolisiert ist, sind Ausleitrollen vorgesehen, welche nicht näher bezeichnet sind. Der bisher geschilderte Rollen- und Führungsaufbau kann dabei auf Querwänden 25 bis 28 angeordnet sein, welche ihrerseits vorzugsweise verstellbar und eventuell absenkbar auf einem Maschinengrundgestell angeordnet sind. Dazu können an diesem Maschinengrundgestell Schienen vorhanden sein, auf welchen die Wände 25 bis 28 auf Schienenführungen laufen. In der Seitenansicht ebenfalls ersichtlich, sind die umlaufenden Anschlagstücke 8, welche entlang eines Abschnittes in den Rohling eintauchen und darin einen Anschlag für dessen Kanten bilden sowie die aussen angreifenden Formstücke 15, welche in der Figur 2 z.T. nur als durchlaufendes Band 15 dargestellt sind, um die Zeichnung zu vereinfachen.

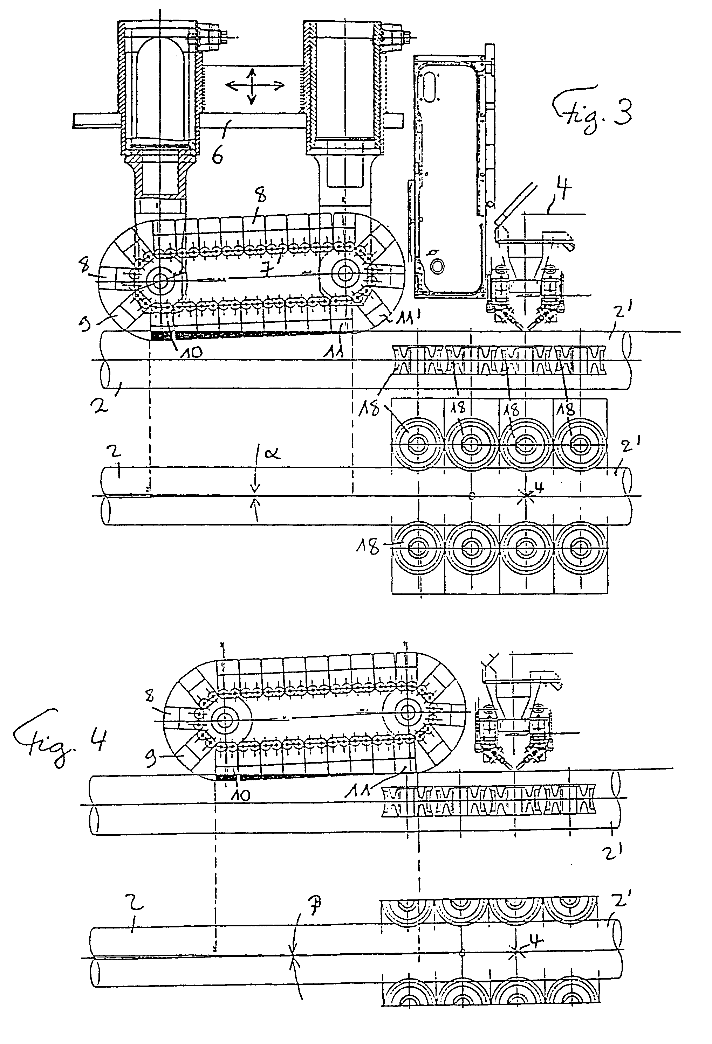

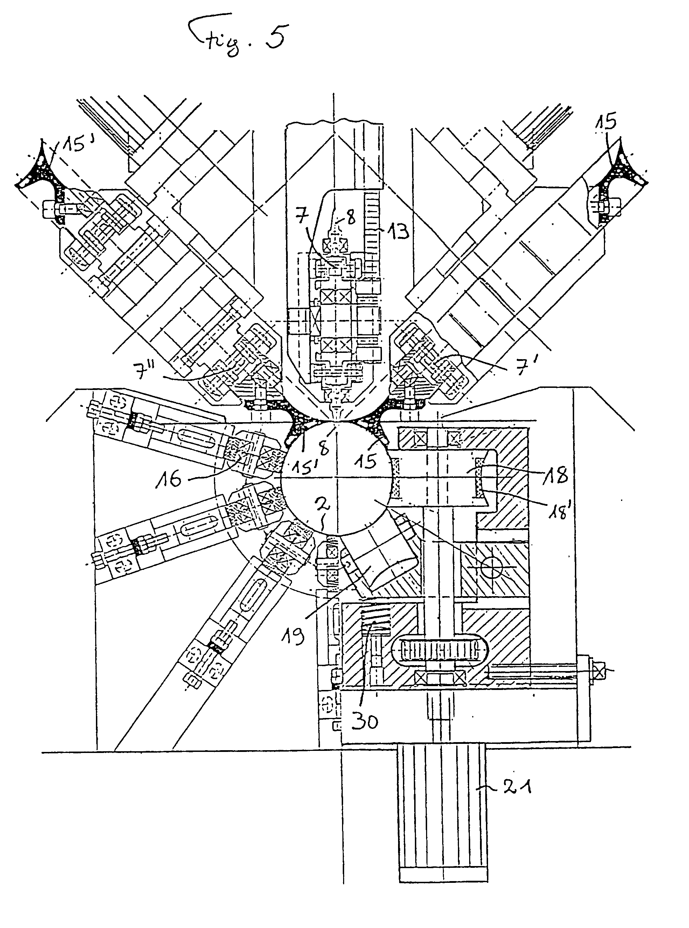

Figur 3 zeigt noch einmal sowohl eine Seitenansicht als auch eine Draufsicht auf den Rohling 2 sowie die Rollen 18, wobei hier beispielshalber 8 solcher Rollen 18 dargestellt sind. Die Figur 3 sowie die Figur 4 sollen zur Erläuterung des Eintauchens und damit der Bildung eines sich verjüngenden Anschlages des Anschlagelementes dienen, und daher sind die äusseren Formelemente 15 hier nicht dargestellt, sind aber natürlich ebenfalls vorhanden. Die Schweissstelle ist wiederum durch den Laserstrahl 4 nur symbolisch dargestellt. Der Träger 6 ist in Richtung der darin angegebenen Pfeile verstellbar. Das in Förderrichtung hintere Kettenrad, an welchem die Anschlagstücke 8, 9 und 10 ersichtlich sind, ist tiefer unten positioniert als das vordere Kettenrad, an welchem die Anschlagstücke 11 und 11' angeordnet sind, so dass sich ein in Förderrichtung nach oben hin gerichteter Verlauf der Kette 7 ergibt. Dieser Verlauf ergibt, zusammen mit den keilförmig ausgebildeten Anschlagstücken 8 bzw. 9 bis 11', einen sich verjüngenden Anschlag, da die von der Schweissstelle weiter entfernten Anschlagstücke tiefer in den Rohling eintauchen und dabei mit ihren weiter auseinanderliegenden Keilflanken den Anschlag bilden als die näher der Schweissstelle befindlichen Anschlagstücke mit ihren näher zusammenliegenden Keilflanken. Damit ergibt sich ein in Förderrichtung sich verjüngender Anschlag, der sich, wie bereits erläutert, mit dem Rohling mitbewegt. Die Bewegungsgeschwindigkeit wird dabei vorzugsweise so gross gewählt, dass zwischen Anschlag und Kanten keine Relativbewegung in Förderrichtung besteht. In der Figur 3 und in der Figur 4 sind die eintauchenden Teile der Anschlagstücke schwarz ausgeführt, so dass die abnehmende Eintauchtiefe entlang des gemeinsamen Abschnittes von Kanten und Anschlagstücken in der Zeichnung ersichtlich ist. Bei der in Figur 3 gewählten Lage des Trägers ergibt sich ein tieferes Eintauchen und damit ein breiterer Anschlag für die Kanten. Dabei ist allerdings der Träger 6 gegenüber der Schweissstelle 4 weiter zurückversetzt als in Figur 4, bei welcher der in Figur 4 nicht mehr dargestellte Träger näher zur Schweissstelle herangerückt ist, aber ein weniger tiefes Eintauchen der Anschlagstücke gewählt ist, so dass sich ein insgesamt weniger breiter Anschlag im Rohling für dessen Kanten ergibt. Durch entsprechende Verstellung des Trägers kann der Anschlag nach Wunsch gewählt werden. In beiden Fällen ergibt sich ein mit dem Rohr mitlaufender und damit in Förderrichtung reibungsfreier Anschlag für die Kanten, was deren genaue Positionierung erlaubt. Eine Reibungskomponente entsteht indes durch das sukzessive Auftauchen der Anschlagstücke bzw. deren Herausziehen aus dem Rohling. Eine derartige Reibung ist indes erwünscht, da dadurch die Kanten nach oben hin durch das Formstück mitgenommen werden und dadurch an die entsprechenden äusseren Führungsmittel, z.B. äussere Rollen oder die bereits erwähnten äusseren Formstücke 15 zur Anlage gebracht werden. Die Bewegung der Anschlagstücke aus dem Rohling hinaus kann durch Führungen an der Kette anders als im dargezeigten Beispiel gewählt werden. So können z.B. Führungen für die Kette vorgesehen sein, welche im Bereich des jeweils austretenden Anschlagstückes 11 diesem eine stärkere Vertikalbewegungskomponente verleihen, so dass das Formstück 11 jeweils nicht durch die in diesen Beispielen dargestellte Drehbewegung aus dem Rohling herausgeführt wird, sondern im wesentlichen durch ein vertikales Herausziehen. Der Winkel α bzw. β, welcher von dem sich verjüngendem Anschlag gebildet wird, kann z.B. ein Grad oder auch weniger betragen.

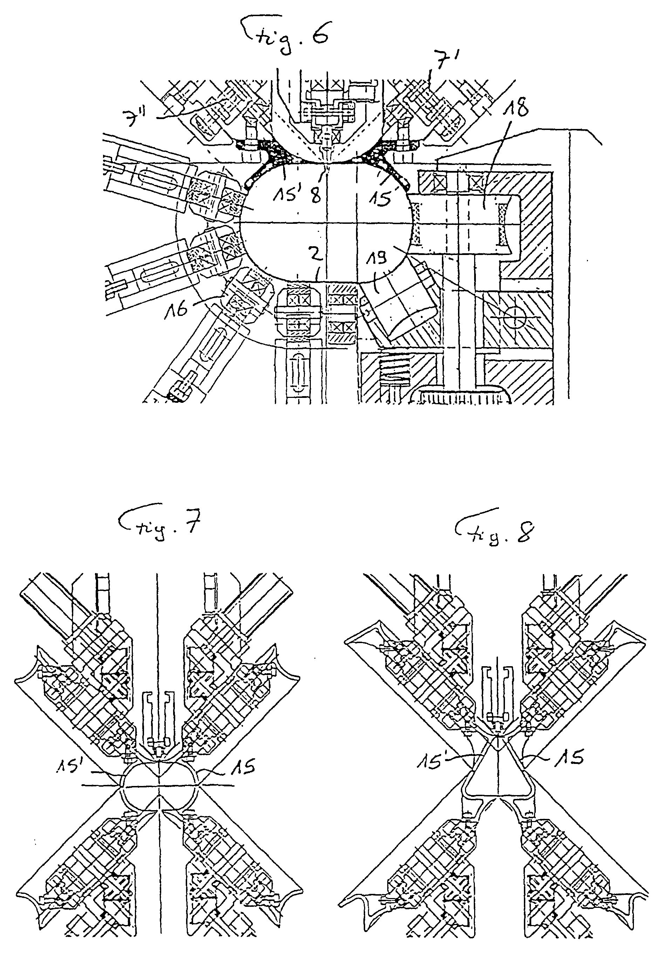

Figur 5 zeigt eine Schnittansicht durch ein Ausführungsbeispiel, welches im wesentlichen den bisher besprochenen Ausführungsbeispielen entspricht. In der linken Hälfte der Figur 5 ist dabei die Schnittebene im Bereich der Rollen 16 gewählt, in der rechten Hälfte der Figur ist die Schnittebene im Bereich der Rollen 18 bzw. 19 gewählt. Gleiche Bezugszeichen wie bis anhin verwendet, bezeichnen dabei gleiche Teile. In Figur 5 ist der Rohling 2 im Querschnitt ersichtlich sowie eines der vielen keilförmigen Anschlagstücke 8, welches sich im Rohling befindet. Ersichtlich ist, wie das Anschlagstück von den Kanten des Rohlings 2 beaufschlagt wird. Die aussen am Rohling 2 anliegenden und ebenfalls mit diesem mitbewegten Formstücke 15 und 15' welche jeweils an einer Kette 7'bzw. 7'' angeordnet sind, bilden eine den oberen Bereich des Rohlings umgreifende Formschale, welche sich mit dem Rohling mitbewegt. Sowohl durch die Rollen 16 als auch durch die Rollen 18 und 19 wird der Rohling in die Schale hineingedrückt und dessen Kanten werden gegen das Anschlagelement 8 gedrückt. Im Schweissbereich kann dazu die Rolle 19 durch die Kraft einer Feder 30 oder allenfalls durch einen gesteuerten Aktuator z.B. pneumatisch oder magnetisch gegen den Rohling 2 gedrückt werden, um ein Andrücken des Rohlings gegen die mit ihm bewegte Schale 15, 15' bzw. das Anschlagelement 8 zu erzielen. Die angetriebene Rolle 18 kann z.B. mit Magneten 18' versehen sein, um einen magnetischen Rohling zu fördern. Auch in den Formstücken 15 bzw. 15' können Magnetmittel oder pneumatische Saugmittel vorgesehen sein, welche ein Anliegen der Wandung des Rohlings 2 an den Formstücken fördern. Die Ketten 7' und 7'', an denen die Formstücke 15 bzw. 15' angeordnet sind, werden ebenfalls durch einen nicht näher dargestellten Antrieb, vorzugsweise mit derselben Geschwindigkeit wie das Rohr, angetrieben. Die Formstücke 15 bzw. 15' können dabei auswechselbar sein, um für verschiedene Rohlings- bzw. Rohrformen geeignet zu sein.

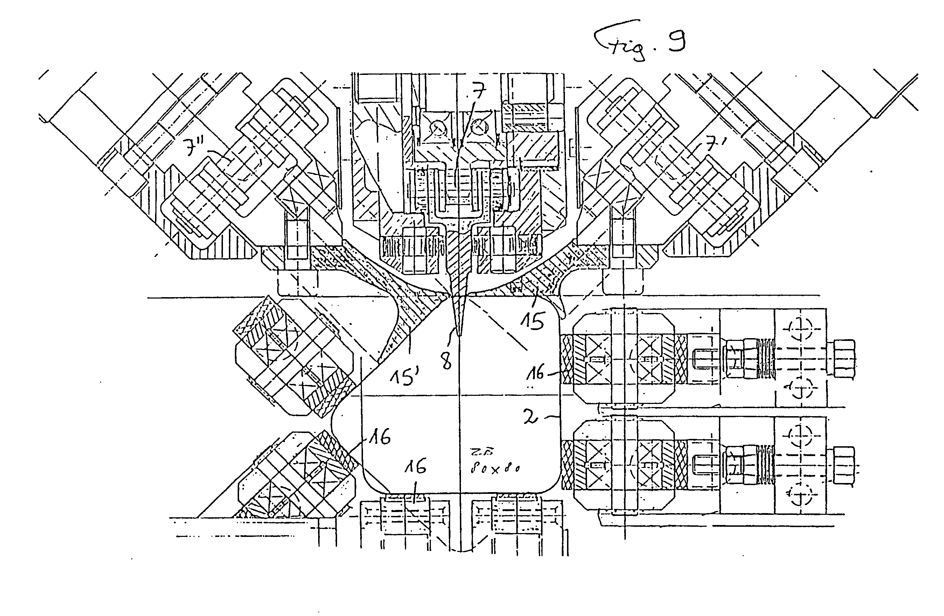

Figur 6 zeigt eine andere Form eines Rohlings und entsprechend anders geformte Formstücke 15 und 15'. Im übrigen bezeichnen gleiche Bezugszeichen wie bis anhin verwendet gleiche Teile.

Es ist ersichtlich, dass durch die mitbewegten Formelemente bzw. das mitbewegte Anschlagelement jeweils für sich eine gute Positionierung der Kantenlage und ein im wesentlichen kontinuierliches Schliessen des Rohlings erzielbar ist. Im Zusammenspiel der beiden Aspekte ergibt sich eine besonders vorteilhafte Positionierung der Kanten bzw. des Schliessens des Rohlings.

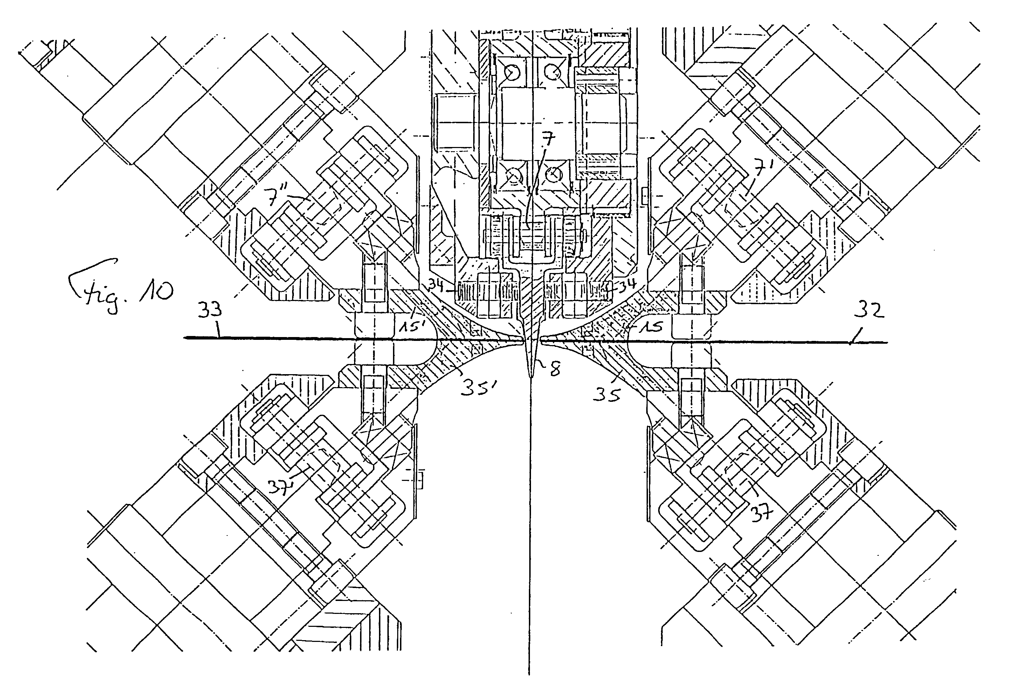

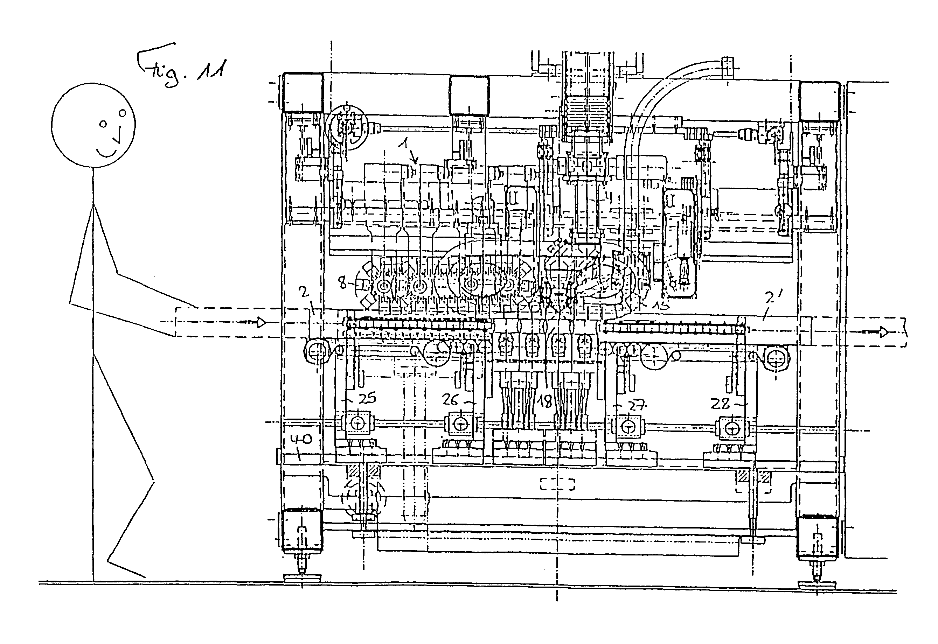

Die Figuren 7 und 8 zeigen Ausführungsformen, bei welchen auch die unteren Rollen durch äussere Formelemente ersetzt sind, welche sich mit dem jeweiligen Rohling bzw. dem Rohr mitbewegen. Es wird dadurch eine im wesentlichen geschlossene Schale gebildet, wobei natürlich auch hier, wie bis anhin, ein Spalt zwischen den oberen Formstücken vorhanden ist, welcher einerseits das Eintauchen des Anschlagelementes erlaubt und andererseits den eigentlichen Schweissbereich für den Laserstrahl freihält. Die unteren Formelemente schliessen sich aber an die oberen Formelemente an, so dass sich eine im wesentlichen geschlossene Schale bildet, welche in Figur 7 zur Kantenpositionierung und Führung einer ovalen Rohrform und in Figur 8 zur Positionierung und Führung einer dreieckigen Rohrform ausgestaltet ist. Auch bei diesen Beispielen sind, wie bei den vorhergehenden Ausführungen, die Formelemente von an Ketten oder Riemen angeordneten, vorzugsweise auswechselbaren Formstücken gebildet, welche durch die Ketten oder Riemen auf nicht näher dargestellte Weise angetrieben werden.

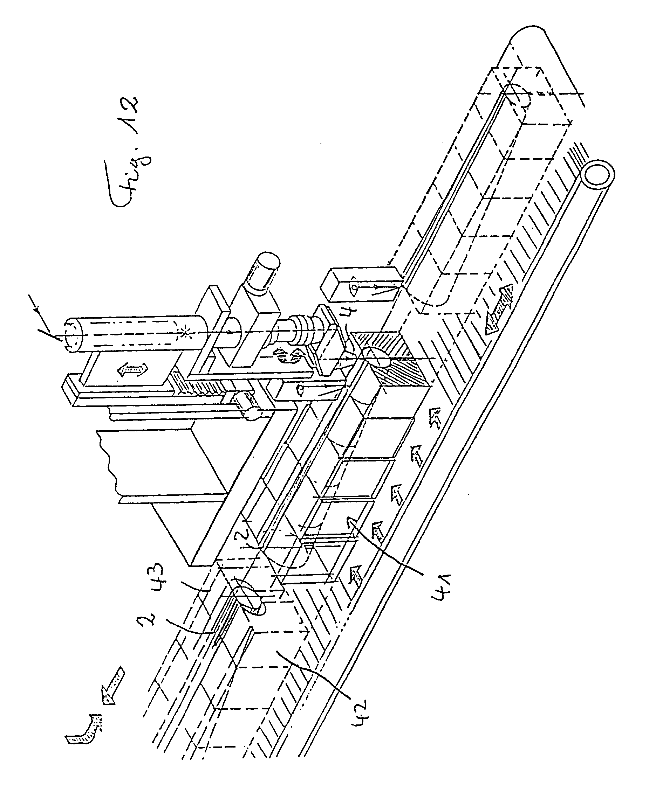

Figur 9 zeigt ein weiteres Ausführungsbeispiel zur Kantenpositionierung bei einem asymmetrisch geformten Rohr, wobei verschieden geformte Formstücke 15 bzw. 15' zum Einsatz kommen. Im übrigen gilt das für die vorstehend beschriebenen Beispiele Gesagte für dieses Beispiel ebenfalls und gleiche Bezugszeichen bezeichnen gleiche Teile wie bis anhin.

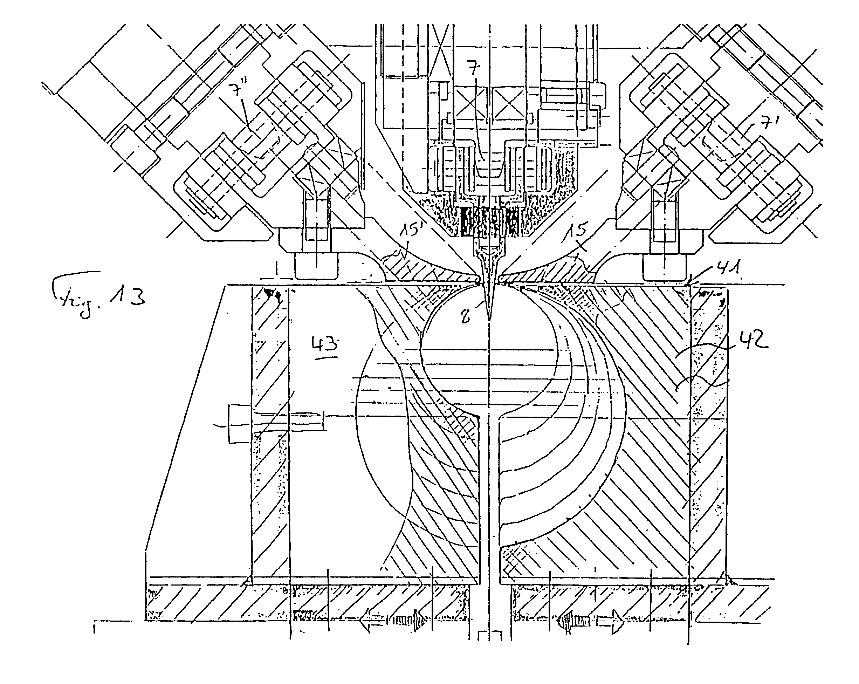

Figur 10 zeigt eine weitere Ausführungsform, bei welcher die beiden bisher erläuterten Aspekte der Erfindung beim Stumpfschweissen ebener Bleche 32 und 33 verwendet werden. Die Kanten der Bleche werden dabei ebenfalls zum Anschlag an das Anschlagelement mit seinen Anschlagstücken 8 gebracht, wobei auch dieses Anschlagelement über die angetriebene Kette in Richtung auf die Schweissstelle bewegt wird, vorzugsweise mit derselben Geschwindigkeit, mit welchem die Bleche zur Schweissstelle geführt werden. Auch hier ist das jeweilige Anschlagstück in Führungen 34 geführt, wie dies auch für die bereits besprochenen Ausführungsformen zutrifft bzw. zutreffen kann. Ebenfalls vorhanden sind die äusseren Formelemente 15 und 15', welche ebenfalls von an einer Kette 7' bzw. 7'' vorzugsweise lösbar angeordneten Formstücken gebildet werden. Die Formstücke sind hier so geformt, dass sich eine ebene Beaufschlagungsfläche für das jeweilige Blech ergibt. An der Unterseite der Bleche sind nun ebenfalls Formelemente 35 und 35' angeordnet, welche, ebenfalls über Kettentriebe 37 und 37' mitbewegt, mit den Blechen auf die Schweissstelle zulaufen. Auch die Formstücke dieser Ausführung sind wie die bisher bei den vorhergehenden Ausführungsformen beschriebenen Formstücke so angeordnet, dass sie nach dem gemeinsamen Abschnitt mit dem Schweissgut sich von diesem lösen, umgelenkt werden und eine Rückführbewegung machen und nach einer weiteren Umlenkung wieder mit dem Schweissgut in Kontakt treten. Bei dem gezeigten Ausführungsbeispiel zum Schweissen ebener Bleche ergibt sich ebenfalls durch die Formelemente und das Anschlagelement eine exakte Positionierung der Kanten. Auch bei diesem Ausführungsbeispiel ist das Anschlagelement vorzugsweise keilförmig ausgebildet und bildet durch eine sich ändernde Eintauchtiefe der Keile ein sich in Richtung auf die Schweissstelle hin verjüngendes Anschlagelement, so dass die Blechkanten, welche durch nicht gezeigte Mittel zusätzlich gegen das Anschlagelement gedrückt werden können, zur Schweissstelle hin aufeinander zulaufen.

Figur 11 zeigt eine Seitenansicht einer Rohrschweissmaschine, bei welcher die bereits erwähnten Aspekte der Erfindung verwirklicht sind, wobei gleiche Bezugszeichen, wie bis anhin verwendet, gleiche Teile bezeichnen. In der Seitenansicht ist insbesondere ersichtlich, wie die Wände 25 bis 28 auf einer Schiene 40 lösbar befestigt sind.

Gemäss einem weiteren Aspekt der Erfindung können indes diese Wandteile 25 bis 28 oder eine Untergruppe davon auf der Schiene angetrieben verfahrbar angeordnet sein, um einen weiteren Aspekt der Erfindung zu ermöglichen, welcher anhand der Figuren 12 und 13 erläutert wird. Dabei werden konische Rohre geschweisst, wie dies in Figur 12 ersichtlich ist, wobei der jeweilige konische Rohling in einer z.B. aus mehreren Abschnitten zusammengesetzten konischen Form 41 gehalten ist. Diese konische Form wird mit dem Rohling zusammen am Schweissstrahl vorbeitransportiert, wobei in Figur 12 dazu ein bandförmiges Fördermittel dargestellt ist. Wie gesagt, kann aber die konische Form auch an den verfahrbaren Wandteilen 25 bis 28 angeordnet sein, von denen zu diesem Zweck die Rollen entfernt worden sind, so dass an den Wandteilen die konische Form 41 befestigt werden kann. Die Form 41 ist dabei vorzugsweise weiter aus Formteilen 42 und 43 aufgebaut, welche auf den Rohling zu schliessbar bzw. öffenbar ist, was in Figur 12 und auch in Figur 13 mit entsprechenden Pfeilen angedeutet ist. In Figur 12 ist dabei eine erste Form in noch offener Stellung und eine zweite, bereits bei der Schweissstelle befindliche Form in geschlossener Stellung gezeigt. Auch bei diesem Schweissen von konischen Rohren können die bereits beschriebenen Aspekte der Erfindung eingesetzt werden, was anhand von Figur 13 gezeigt ist, welche einen Vertikalquerschnitt durch eine geschlossene Form und das Anschlagelement bzw. die Formelemente zeigt. So ist hier ebenfalls das Anschlagelement mit keilförmigen Formstücken 8 eingesetzt, welches einen Anschlag für die Kanten des vorgebogenen konischen Rohlings bildet. Auch dieses Anschlagelement ist vorzugsweise als sich gegen die Schweissstelle hin verjüngendes Anschlagelement ausgeführt. Die Formelemente 15 und 15' bilden hier den oberen Abschluss der Form 41 mit ihren Formhälften 42 und 43. Die Formelemente bilden dabei einerseits einen oberen Anschlag für die den Kanten benachbarte Mantelfläche des konischen Rohlings und dienen dabei zur präzisen Positionierung der Kanten. Andererseits bilden die Formelemente hier einen oberen Abschluss der Form 41 und schützen diese weiter gegen Hitzeeinwirkung durch den Schweissstrahl 4. Dies erlaubt es insbesondere, für die Form 41 Kunststoffelemente zu verwenden, was aus Herstellungs- und Kostergründen günstig ist.

Die Schweissung des konischen Rohres erfolgt in dem gezeigten Ausführungsbeispiel bevorzugterweise so, dass der Rohling zunächst bei deaktiviertem Schweissstrahl durch die Vorrichtung gefahren wird, wobei die Kanten positioniert und die Form geschlossen wird. Beim Zurückfahren des Rohlings mit dem von den Wänden 25 - 28 gebildeten Wagen erfolgt dann die Schweissung und das geschweisste Rohr kann entladen und ein neuer Rohling in die offene Form geladen werden.

Die beschriebenen jeweiligen Schweissvorrichtungen können in an sich bekannter Weise vor dem Schweissstrahl mit einer optischen Kantenerkennung ausgerüstet sein, welche das korrekte Schliessen der Kanten vor der Schweissstelle überwacht. Mit dem Ausgangssignal einer solchen Kantenerkennungseinrichtung kann insbesondere die bereits erwähnte Rolle 19 gesteuert werden, welche eine Kraft auf den Rohling im wesentlichen in Richtung auf die Schweisslinie erzeugt, um die Kanten am Anschlagelement und/oder den Formelementen zu einem definierten Anliegen zu bringen. Ferner kann, wie in Figur 1 gezeigt, eine Rolle 50 vorgesehen sein, welche zwischen dem Anschlagelement und der Schweissstelle angeordnet ist und von oben her, in der Lücke zwischen den Formelementen 15 und 15', auf die einander gegenüberstehenden Blechteile einwirkt. Die Rolle 50 kann dabei ebenfalls gefedert sein oder gesteuert bewegt werden, wobei dazu ebenfalls die Ausgangssignale eines Kantenbeurteilungssystems verwendet werden können, um die Kanten vor der Schweissstelle in eine für die Schweissung optimale gegenseitige Lage zu bringen. Die Rolle 50 kann z.B. auch zweiteilig mit einer isolierenden Zwischenlage ausgestattet sein, so dass über die Rolle ein Prüfstrom auf die beiden einander gegenüberliegenden Blechbereiche einleitbar ist. Mittels des Prüfstromes kann dann ermittelt werden, ob der Kontakt zwischen den Blechkanten für die Schweissung genügend ist oder nicht. Die Rolle 50 kann in diesem Fall allenfalls ein optisches Nahtbeobachtungssystem ersetzen oder ergänzen. Ferner kann auf bekannte Weise nach der Schweissstelle eine Nahtprüfungsstation, insbesondere eine optische Nahtprüfungsstation, angeordnet sein.

## Patentansprüche

1. Verfahren zum Positionieren von mittels Laser stumpf zu verschweissenden Blechkanten, welche auf eine Schweissstelle zu bewegt werden, wobei die Kanten zum Anliegen an ein entlang eines Abschnittes zwischen die Kanten ragendes, sich im Abschnitt mit den Kanten mitbewegendes endloses Anschlagelement (7, 8, 9, 10, 11) gebracht werden, **dadurch gekennzeichnet, dass** das Anschlagelement von einer umlaufenden Kette (7) oder einem umlaufenden Riemen mit einer Mehrzahl von daran angeordneten Anschlagteilen (8, 9, 10, 11) gebildet wird, und dass mindestens ein Teil der den Kanten benachbarten Blechfläche durch mindestens ein sich in Richtung auf die Schweissstelle mitbewegendes endloses Formelement (15, 15') beaufschlagt wird, wobei das Formelement von einer Kette oder einem Riemen mit einer Mehrzahl von daran, vorzugsweise auswechselbar, angeordneten Formstücken gebildet ist.

2. Verfahren nach Anspruch 1, **dadurch gekennzeichnet, dass** durch das Anschlagelement ein Anschlag veränderlicher Breite gebildet wird, indem das Anschlagelement keilförmige Anschlagteile (8, 9, 10, 11) aufweist, welche entlang des Abschnitts verschieden tief zwischen die Kanten eintauchen.

3. Verfahren nach Anspruch 2, **dadurch gekennzeichnet, dass** das Anschlagelement einen sich in Bewegungsrichtung der Kanten verjüngenden Anschlag bildet.

4. Verfahren nach Anspruch 2 oder 3, **dadurch gekennzeichnet, dass** die Ausfahrbewegung der Anschlagteile gegen Ende des Abschnittes beeinflusst wird, insbesondere um ein im wesentlichen vertikal zur Blechoberfläche erfolgendes Ausfahren zu bewirken.

5. Verfahren nach Anspruch 1, **dadurch gekennzeichnet, dass** beidseits der Schweisslinie jeweils ein Formelement vorgesehen ist, welche Formelemente (15, 15') eine schalenartige Aufnahme für das Blech bilden.

6. Verfahren nach Anspruch 5, **dadurch gekennzeichnet, dass** weitere Formelemente vorgesehen sind, und dass durch die Formelemente eine im wesentlichen geschlossene Aufnahme gebildet wird.

7. Verfahren nach Anspruch 5 oder 6, **dadurch gekennzeichnet, dass** in den Formelementen magnetische oder pneumatische Mittel vorgesehen sind, durch welche ein Anliegen des Blechs an den Formelementen gefördert wird.

8. Verfahren nach Anspruch 5, **dadurch gekennzeichnet, dass** das Blech unterhalb der Formelemente von einer Vielzahl von Rollen (16, 18), insbesondere im Schweissbereich von formangepassten Rollen (18) beaufschlagt wird.

9. Verfahren nach Anspruch 8, **dadurch gekennzeichnet, dass** mindestens eine der Rollen, insbesondere eine der formangepassten Rollen, das Blech federnd oder mit einer aktiv erzeugten gesteuerten oder geregelten Kraft im wesentlichen in Richtung auf die Schweisslinie hin beaufschlagt.

10. Verfahren nach einem der Ansprüche 1 bis 9, **dadurch gekennzeichnet, dass** vor der Schweissstelle mindestens eine im Bereich der Schweisslinie auf die Bleche einwirkende Rolle (50) vorgesehen ist.

11. Anwendung des Verfahrens nach einem der Ansprüche 1 bis 10 beim Schweissen von vorgebogenen Rohlingen zu Rohren, wobei diese dünnwandige Rohlinge mit einem Verhältnis von Durchmesser des Rohres zu Materialdicke des Rohres von grösser gleich 65 sind.

12. Vorrichtung zum Positionieren stumpf zu verschweissender Blechkanten von Blechen, welche durch Fördermittel auf eine Schweissstelle zu gefördert werden, wobei die Vorrichtung ein zum Eintauchen zwischen die Blechkanten entlang eines Abschnittes derselben bestimmtes, einen Anschlag für die Kanten bildendes endloses Anschlagelement aufweist, **dadurch gekennzeichnet, dass** das Anschlagelement eine umlaufende Kette (7) oder einen umlaufenden Riemen sowie einen Antrieb (12, 13) für die Kette oder den Riemen und eine Mehrzahl von an der Kette oder dem Riemen angeordneten Anschlagteile (8,9,10,11) umfasst, und dass die Vorrichtung weiter mindestens ein angetriebenes, endloses Formelement (15, 15') aufweist, welches zur Bildung eines Formbereiches mindestens für einen an eine der Kanten anschliessenden Blechbereich ausgestaltet ist und von einer Kette oder einem Riemen mit einer Mehrzahl von daran, vorzugsweise auswechselbar, angeordneten Formstücken gebildet ist.

13. Vorrichtung nach Anspruch 12, **dadurch gekennzeichnet, dass** das Anschlagelement keilförmige Anschlagteile aufweist.

14. Vorrichtung nach Anspruch 12 oder 13, **dadurch gekennzeichnet, dass** das Anschlagelement auf einem zu den Fördermitteln und/oder der Schweissstelle lageverstellbaren Träger (6) angeordnet ist.

15. Vorrichtung nach Anspruch 12, **dadurch gekennzeichnet, dass** zwei Formelemente (15 und 15') vorgesehen sind, welche zusammen eine obere, beidseits der Schweisslinie liegende Formschale bilden.

16. Vorrichtung nach Anspruch 15, **dadurch gekennzeichnet, dass** weitere Formelemente vorgesehen sind, welche zusammen mit der oberen Formschale eine im wesentlichen geschlossene Formschale bilden.

17. Vorrichtung nach einem der Ansprüche 12 bis 16, **dadurch gekennzeichnet, dass** unterhalb der Formelemente eine Mehrzahl von Rollen (16, 18, 19) angeordnet sind, wobei mindestens eine der Rollen (19) zur Ausübung einer Federkraft oder einer durch ein gesteuertes oder geregeltes Krafterzeugungsmittel erzeugt Kraft in im wesentlichen in Richtung auf die Schweisslinie ausgestaltet ist.

18. Vorrichtung nach einem der Ansprüche 15 bis 17, **dadurch gekennzeichnet, dass** mindestens eine in der Schweisslinie vor der Schweissstelle angeordnete Rolle (50) vorgesehen ist, welche in die Formschale hineinragt.

19. Schweissvorrichtung, insbesondere Rohrschweissvorrichtung, mit einer Positioniervorrichtung nach einem der Ansprüche 12 bis 18.

20. Verwendung der Vorrichtung nach einem der Ansprüche 12 bis 18 bei einer Schweissmaschine zum Schweissen von vorgebogenen Rohlingen zu Rohren, wobei die Rohlinge dünnwandige Rohlinge mit einem Verhältnis des Durchmessers des Rohres zur Materialdicke des Rohres von ca. grösser gleich 65 sind.

21. Verfahren zum Schweissen von konischen Rohren, insbesondere nach einem der Ansprüche 1 bis 10, **dadurch gekennzeichnet, dass** der konisch vorgeformte Rohling in einer konischen Form angeordnet wird, und wobei der schweissseitige obere Abschluss der konischen Form von mindestens einem endlosen, zusammen mit der Form bewegbaren Formelement gebildet wird.

22. Vorrichtung zum Schweissen von konischen Rohren, insbesondere nach einem der Ansprüche 12 bis 18, **dadurch gekennzeichnet, dass** diese eine konische Form zur Aufnahme des Rohlings und mindestens ein endloses, mit der Form zur Schweissstelle, und vorzugsweise mit dieser rückwärts zum Ausgangspunkt bewegbares, Formelement aufweist, welches vorzugsweise den oberen, schweissseitigen Abschluss der Form bildet.

## Claims

1. Method for positioning sheet metal edges to be butt welded by means of laser that are moved towards a welding site, whereby along a section the edges are brought to rest against an endless stop element (7, 8, 9, 10, 11) projecting between the edges and moving with the edges within the section, **characterised in that** the stop element comprises a circulating chain (7) or a circulating belt with a plurality of stop members (8, 9, 10, 11) arranged thereon and that at least a part of the sheet metal surface adjoining the edges is impinged upon by at least one endless form element (15, 15') also moving in the direction towards the welding site, whereby the form element comprises a chain or a belt with a plurality of preferably interchangeable form pieces arranged thereon.

2. Method according to Claim 1, **characterised in that** a stop of variable width is formed by the stop element **in that** the stop element has wedge-shaped stop members (8, 9, 10, 11), which immerse to varying depths between the edges along the section.

3. Method according to Claim 2, **characterised in that** the stop element forms a stop narrowing in the movement direction of the edges.

4. Method according to Claim 2 or 3, **characterised in that** the emergence movement of the stop members towards the end of the section is influenced, particularly in order to bring about emergence occurring substantially vertical to the sheet metal surface.

5. Method according to Claim 1, **characterised in that** a form element is provided on either side of the weld line, said form elements (15, 15') forming a shell-like receptacle for the sheet metal.

6. Method according to Claim 5, **characterised in that** further form elements are provided and that a substantially closed receptacle is formed by the form elements.

7. Method according to Claim 5 or 6, **characterised in that** provided in the form elements are magnetic or pneumatic means by means of which resting of the sheet metal against the form elements is promoted.

8. Method according to Claim 5, **characterised in that** the sheet metal is impinged upon below the form elements by a plurality of rollers (16, 18), particularly in the weld region by form-adapted rollers (18).

9. Method according to Claim 8, **characterised in that** at least one of the rollers, particularly one of the form-adapted rollers impinges in sprung manner upon the sheet metal or with an actively produced controlled or regulated force substantially in the direction towards the weld line.

10. Method according to one of the claims 1 to 9, **characterised in that** before the weld site, at least one roller (50) impinging in the region of the weld line on the metal sheets is provided.

11. Application of the method according to one of the claims 1 to 10 for welding pre-bent workpieces to pipes, whereby these thin-walled workpieces have a ratio of diameter of the pipe to material thickness of the pipe greater than or equal to 65.

12. Device for positioning sheet metal edges to be butt welded that are moved by conveying means towards a welding site, whereby the device has an endless stop element intended for immersion between the sheet metal edges along a section of said edges and forming a stop for the edges, **characterised in that** the stop element includes a circulating chain (7) or a circulating belt and a drive (12, 13) for the chain or the belt and a plurality of stop members (8, 9, 10, 11) arranged on the chain or the belt, and that the device also has at least one driven endless form element (15, 15') designed for forming a form region at least for a sheet metal region adjoining the edges and comprises a chain or a belt with a plurality of preferably interchangeable form pieces arranged thereon.

13. Device according to Claim 12, **characterised in that** the stop element has wedge-shaped stop members.

14. Device according to Claim 12 or 13, **characterised in that** the stop element is arranged on a carrier (6) of adjustable position relative to the conveying means and/or the welding site.

15. Device according to Claim 12, **characterised in that** two form elements (15 and 15') are provided which together comprise an upper form shell lying either side of the weld line.

16. Device according to Claim 15, **characterised in that** further form elements are provided which together with the upper form shell comprise a substantially closed form shell.

17. Device according to one of the claims 12 to 16, **characterised in that** a plurality of rollers (16, 18, 19) is arranged below the form elements, whereby at least one of the rollers (19) is designed for exerting a spring force or a force generated by a controlled or regulated force generating means substantially in the direction towards the weld line.

18. Device according to one of the claims 15 to 17, **characterised in that** at least one roller (50) which projects into the form shell is provided arranged in the weld line before the weld site.

19. Welding device, particularly pipe welding device with a positioning device according to one of the claims 12 to 18.

20. Application of the device according to one of the claims 12 to 18 with a welding machine for welding workpieces to pipes, whereby the workpieces are thin-walled workpieces with a ratio of the diameter of the pipe to the material thickness of the pipe of approximately greater than or equal to 65.

21. Method for welding conical pipes, particularly according to the claims 1 to 10, **characterised in that** the conically preformed workpiece is arranged in a conical form, and whereby the upper conclusion of the conical form on the weld side is composed of at least one endless form element movable with the form.

22. Device for welding conical pipes, particularly according to one of the claims 12 to 18, **characterised in that** it has a conical form for accepting the workpiece and at least one endless form element moveable with the form towards the welding site and preferably moveable backwards with it to the starting point, said form element preferably comprising the upper conclusion of the form on the weld side.

## Revendications

1. Procédé pour le positionnement d'arêtes de tôle à souder bout à bout par laser, qui sont déplacées vers un point de soudage, dans lequel les arêtes sont amenées en appui sur un élément de butée (7, 8, 9, 10, 11) sans fin qui dépasse le long d'un tronçon entre les arêtes et se déplace dans le tronçon avec les arêtes, **caractérisé en ce que** l'élément de butée est formé par une chaîne (7) rotative ou une courroie rotative avec une pluralité de pièces de butée (8, 9, 10, 11) disposées dessus, et **en ce qu'**au moins une partie de la surface de tôle voisine des arêtes est sollicitée par au moins un élément de formage (15, 15') continu qui se déplace de manière associée vers le point de soudage, l'élément de formage étant formé par une chaîne ou une courroie avec une pluralité de pièces de formage disposées dessus, de préférence interchangeables.

2. Procédé selon la revendication 1, **caractérisé en ce qu'**une butée de largeur variable est constituée par l'élément de butée par le fait que l'élément de butée présente des pièces de butée (8, 9, 10, 11) en forme de coin, qui plongent le long du tronçon à des profondeurs différentes entre les arêtes.

3. Procédé selon la revendication 2, **caractérisé en ce que** l'élément de butée forme une butée qui se rétrécit dans le sens de mouvement des arêtes.

4. Procédé selon la revendication 2 ou 3, **caractérisé en ce que** le mouvement de sortie des parties de butée est influencé vers l'extrémité du tronçon, en particulier pour obtenir une sortie s'effectuant sensiblement perpendiculairement à la surface de la tôle.

5. Procédé selon la revendication 1, **caractérisé en ce que**, sur chacun des deux côtés de la ligne de soudage, il est prévu un élément de formage, lesquels éléments de formage (15, 15') forment un logement de coque pour la tôle.

6. Procédé selon la revendication 5, **caractérisé en ce qu'**il est prévu d'autres éléments de formage et **en ce qu'**un logement sensiblement fermé est formé par les éléments de formage.

7. Procédé selon la revendication 5 ou 6, **caractérisé en ce qu'**il est prévu dans les éléments de formage des moyens magnétiques ou pneumatiques par lesquels on favorise un appui de la tôle sur les éléments de formage.

8. Procédé selon la revendication 5, **caractérisé en ce que** la tôle est sollicitée au-dessous des éléments de formage par une grande quantité de rouleaux (16, 18), en particulier dans la zone de soudage, par des rouleaux (18) adaptés en moule.

9. Procédé selon la revendication 8, **caractérisé en ce qu'**au moins un des rouleaux, en particulier l'un des rouleaux adapté au moule, sollicite la tôle en suspension élastique ou avec une force contrôlée ou régulée générée de façon active sensiblement en direction vers la ligne de soudage.

10. Procédé selon l'une quelconque des revendications 1 à 9, **caractérisé en ce qu'**il est prévu avant le point de soudage au moins un rouleau (50) agissant dans la zone de la ligne de soudage sur les tôles.

11. Utilisation du procédé selon l'une quelconque des revendications 1 à 10 lors du soudage d'ébauches précintrées en tuyaux, ces ébauches à paroi mince présentant un rapport entre le diamètre du tuyau et l'épaisseur de matériau du tuyau égale ou supérieure 65.

12. Dispositif pour le positionnement d'arêtes de tôle à souder bout à bout, qui sont transportées par des moyens de transport en un point de soudage, le dispositif présentant un élément de butée sans fin formant une butée pour les arêtes de tôle et destiné à pénétrer entre les arêtes de tôle le long d'une partie de celles-ci, **caractérisé en ce que** l'élément de butée comprend une chaîne (7) rotative ou une courroie rotative et un entraînement (12, 13) pour la chaîne ou la courroie et une pluralité de pièces de butée (8, 9, 10, 11) disposées sur la chaîne ou la courroie, et **en ce que** le dispositif présente également au moins un élément de formage (15, 15') sans fin et entraîné, qui est conçu pour former une zone de formage au moins pour une zone de tôle se raccordant à l'une des arêtes et est formé par une chaîne ou une courroie avec une pluralité de pièces de formage disposées dessus, de préférence interchangeables.

13. Dispositif selon la revendication 12, **caractérisé en ce que** l'élément de butée présente des parties de butée en forme de coin.

14. Dispositif selon la revendication 12 ou 13, **caractérisé en ce que** l'élément de butée est disposé sur un support (6) réglable en position par rapport aux moyens de transport et/ou au point de soudage.

15. Dispositif selon la revendication 12, **caractérisé en ce qu'**il est prévu deux éléments de formage (15, 15'), qui forment ensemble une coque de formage supérieure et située des deux côtés de la ligne de soudage.

16. Dispositif selon la revendication 15, **caractérisé en ce qu'**il est prévu d'autres éléments de formage, qui forment conjointement avec la coque de moule supérieure une coque de moule sensiblement fermée.

17. Dispositif selon l'une quelconque des revendications 12 à 16, **caractérisé en ce qu'**un grand nombre de rouleaux (16, 18, 19) sont disposés au-dessous des éléments de formage, au moins l'un des rouleaux (19) étant conçu pour exercer une force de ressort ou une force générée par un moyen de génération de force commandé ou régulé sensiblement dirigée vers la ligne de soudage.

18. Dispositif selon l'une quelconque des revendications 15 à 17, **caractérisé en ce qu'**il est prévu au moins un rouleau (50) disposé sur la ligne de soudage avant le point de soudage (50), qui dépasse à l'intérieur de la coque de formage.

19. Dispositif de soudage, en particulier dispositif de soudage de tuyaux, avec un dispositif de positionnement selon l'une quelconque des revendications 12 à 18.

20. Utilisation du dispositif selon l'une quelconque des revendications 12 à 18 sur une machine de soudage pour le soudage d'ébauches précintrées en tuyaux, les ébauches étant des ébauches à paroi mince avec un rapport entre le diamètre du tuyau et l'épaisseur du matériau du tuyau à peu près égale ou supérieure à 65.

21. Procédé pour le soudage de tuyaux coniques, en particulier selon l'une quelconque des revendications 1 à 10, **caractérisé en ce que** l'ébauche préformée de façon conique est disposée dans un moule conique, et moyennant quoi la fermeture supérieure côté soudage du moule conique est formée par au moins un élément de formage infini et pouvant être déplacé conjointement avec le moule.

22. Dispositif pour le soudage de tuyaux coniques, en particulier selon l'une quelconque des revendications 12 à 18, **caractérisé en ce que** celui-ci présente un moule conique pour le logement de l'ébauche et au moins un élément de formage continu et pouvant être déplacé avec le moule vers le point de soudage, et de préférence avec celui-ci en marche arrière vers le point de départ, lequel élément forme de préférence la fermeture supérieure côté soudage du moule.
